# EUROPÄISCHE PATENTANMELDUNG

(11) **EP 4 825 674 A2**
(43) Veröffentlichungstag der Anmeldung: **21.10.2026**
(21) Anmeldenummer: 26191809.8
(22) Anmeldetag: 12.02.2020
(51) Int. Cl.: B60T 8/40

(54) **BREMSSYSTEM MIT EINER DRUCKVERSORGUNGSEINRICHTUNG UND EINEM SICHERHEITSGATE FÜR DIE BREMSKREISE**

(30) Priorität: 12.02.2019 DE 202019101586 U; 12.02.2019 DE 202019101596 U; 21.03.2019 DE 102019107334
(62) Dokumentnummer(n) der früheren Anmeldung(en) nach Art. 76 EPÜ: 25173604.7 / 4 635 808; 20706151.6 / 3 924 229
(71) Anmelder: IPGATE AG, 8808 Pfäffikon SZ (CH)
(72) Erfinder: Leiber, Thomas, 22203 Rogoznica (HR); Leiber, Heinz, 71739 Oberriexingen (DE)
(74) Vertreter: DTS Patent- und Rechtsanwälte PartmbB

(57) **Zusammenfassung**

Die Erfindung betrifft ein Bremssystem folgendes aufweisend: - zwei Bremkreise (BK1, BK2) mit Bremskreisleitungen (HL4, HL5) für zwei Fahrzeugachsen (VA, HA), sowie mindestens einer hydraulisch wirkenden Radbremse (RB1-4) in jedem Bremskreis (BK1, BK2), wobei jede hydraulisch wirkende Radbremse (RB1-4) über ein ihr zugeordnetes Schaltventil (SV) mit ihrem Bremskreis (BK1, BK2) bzw. dessen Bremskreisleitung (HL4, HL5) verbindbar ist, wobei der Druckaufbau (P_{auf}) und der Druckabbau (P_{ab}) in mindestens einer Radbremse (RB1-4) über das ihr zugeordnete Schaltventil (SV) erfolgt, und einer Druckversorgungseinrichtung (DV), wobei über die Druckversorgungseinrichtung (DV) ein Druckaufbau (P_{auf}) in beiden Bremskreisen (BK1, BK2) erfolgt bzw. erfolgen kann, - mindestens einem, insbeonsere stromlos offenen Kreistrennventil (BP1, BP1), welches zum wahlweisen Absperren oder Freigeben einer die beiden Bremskreise (BK1, BK2) verbindenden hydraulischen Verbindungsleitung (VL) dient, wobei mindestens einem Auslassventil (ZAV, ZAV1), über das ein Vorratsbehälter (VB) mit mindestens einem Bremskreis (BK1, BK2) zum Druckabbau (P_{ab}) direkt oder über ein Kreisstrennventil (BP1, BP2) verbindbar ist, wobei eine von einer Betätigungseinrichtung, insbesondere in Form eines Bremspedals (1) betätigbarer Hauptbremszylinder (SHZ) mit nur einem Arbeitsraum (110), wobei der Arbeitsraum über eine Hydraulikleitung (HL2, HL3) mit der Bremskreisleitung (HL4, HL5) eines Bremskreises (BK1, BK2) direkt oder über ein Kreistrennventil (BP1, BP2) hydraulisch verbindbar ist, wobei ein, insbesondere stromlos offenes, Schaltventil (FV) zum wahlweisen Verschliessen oder Freigeben der Hydraulikleitung (HL2, HL3) dient.

## Beschreibung

Die vorliegende Erfindung betrifft ein Bremssystem mit zwei Bremskreisen, welche jeweils eine Bremskreisleitung aufweisen und dass für zwei Fahrzeugachsen geeignet ist, wobei mindestens eine hydraulisch wirkende Radbremse in jedem Bremskreis vorgesehen ist, und jede hydraulisch wirkende Radbremse über ein ihr zugeordnetes Schaltventil ihrem Bremskreis bzw. dessen Bremskreisleitung verbindbar ist, wobei der Druckaufbau und der Druckabbau in der jeweiligen Radbremse über das ihr zugeordnete Schaltventil erfolgt. Das Bremssystem weist zudem eine Druckversorgungseinrichtung auf, wobei über die Druckversorgungseinrichtung ein Druckaufbau in beiden Bremskreisen erfolgt bzw. erfolgen kann, und dass mindesten ein, insbesondere stromlos offenes, Kreistrennventil vorgesehen ist, das zum wahlweisen Absperren oder Freigeben einer die beiden Bremskreise verbindenden hydraulischen Verbindungsleitung dient.

### Stand der Technik

In den letzten Jahren entstand ein Trend bei Bremssystemen hin zur integrierten Version, der sogenannten 1-Box, mit Integration von elektrohydraulischer Bremse (E-Boost) mit Hauptbremszylinder, "Drive-by-Wire" sowie ABS/ESP-Funktion. Die Systeme unterscheiden sich im Wesentlichen in der konstruktiven Ausführung der Druckbereitstellungseinrichtung und in der Ventilschaltung. Hierbei sind auch vereinfachte Schaltungen durch sogenannte Multiplextechnik (MUX) ohne Auslassventil und Druckmodulation mit der Druckbereitstellungseinrichtung bekannt. Auch gibt es Alternativen zum TandemHauptbremszylinder, z.B. mit Trennkammer zwischen Druckversorgungs- und Schiwmm-Kolben und neuerdings auch Single-Hauptbremszylinder ohne Schwimmkolben. Zur Diagnose des Tandem-Hauptbremszylinders ist stets ein Diagnoseventil vorgesehen. Die Bremssysteme weisen zudem deutliche Unterschiede in der Fehlersicherheit auf.

Unter anderem aus den folgenden Patentdokumenten sind verschiedenste Konzepte und Komponenten vorbekannt. So offenbart die EP3333031 ein Bremssystem mit einem Tandemhauptbremszylinder (THZ), die DE102014111594 und die DE102018111126 einen Tandemhauptbremszylinder mit Druckversorgung (THZ + DV), die DE102017201243 eine Druckversorgungseinrichtung (DV), die DE102017219598 einen Single-Hauptbremszylinder (SHZ) sowie die DE10309145 ein Diagnoseventil.

Zunehmend werden hydraulische Systeme mit zwei oder mehr Kreisen eingesetzt, wobei die Sicherheitsanforderungen bei diesen hydraulischen Systemen steigen. Insbesondere für müssen folgende Fehlerfälle und Funktionen berücksichtigt bzw. bereitgestellt werden:
a. Der Ausfall bzw. die Störung eines Hydraulikreises darf den anderen Hydraulikkreis in seiner Funktion nicht beeinflussen;
b. Sofern nur eine Druckversorgungseinrichtung vorhanden ist, muss bei Ausfall der Druckversorgungseinrichtung, d.h. in der Notfallebene, noch ein Druckaufbau mittels eines per Bremspedal betätigbaren Hauptbremszylinder möglich sein;
c. Sofern nur eine Druckversorgungseinrichtungen vorhanden ist, muss für deren Ausfall eine Hilfsdruckversorgung mit niedriger Leistung für einen sogenannten Notbetrieb vorhanden sein;
d. In den Hydraulikkreisen sind Regelsysteme zu versorgen, welche für den Regelbetrieb sowohl eine gesteuerte bzw. geregelte Druckerhöhung sowie auch eine gesteuerte bzw. geregelte Druckabsenkung benötigen.

Für die Fehlersicherheit des Hydrauliksystems ist es notwendig, stets mittels Diagnosefunktionen bzw. -programmen Fehler im Hydrauliksystem aufzuspüren und entsprechende Maßnahmen zu ergreifen. So ist es insbesondere von großer Bedeutung Einzel- und Doppelfehler zu beachten.

Mögliche Einzel- und Doppelfehler in einem Hydrauliksystem werden anhand eines zweikreisigen Bremssystems nachfolgend erläutert.

In welchem Umfang ein Fahrzeug die Aufgaben des Fahrers bei Bedarf übernehmen kann und wie Mensch und Maschine auf der Straße heute und zukünftig interagieren, erfolgt in den unterschiedlichen Entwicklungsschritten. Es wird oft von den fünf Level oder fünf Stufen der Automatisierung des Fahrzeugs gesprochen, die nachfolgend aufgelistet sind:

| | |
|---|---|
| Level 1: | Assistiertes Fahren, bei dem Fahrassistenzsysteme den Fahrer unterstützen, aber noch nicht selbst das Fahrzeug steuern können; |
| Level 2: | Teilautomatisiertes Fahren, bei dem Systeme u.a. das Steuern des Fahrzeugs übernehmen können, wobei der Fahrer aber stets in der Verantwortung bleibt; |
| Level 3: | Hochautomatisiertes Fahren, bei dem der Fahrer sich in bestimmten Situationen länger vom Fahrgeschehen abwenden kann; |
| Level 4: | Vollautomatisiertes Fahren, bei dem das Fahrzeug überwiegend selbstständig fährt, der Fahrer jedoch fahrtüchtig sein muss; |
| Level 5: | Autonomes Fahren, bei dem das Fahrzeug alle Fahrfunktionen übernimmt und die Personen im Fahrzeug reine Passagiere sind. |

Ob Einzel- und/oder Doppelfehler bei einem Bremssystem tolerierbar sind, hängt somit vom Automatisierungsgrad bzw. dem o.g. Level des Fahrzeugs ab.

### I. Einzelfehler

Bei einem Bremssystem für ein Level 2 Fahrzeug sind Einzelfehler erlaubt, wenn noch die Mindestabbremsung von ca. < 0,3 g erreicht wird. Eine derart geringe Bremsverzögerung kann aber bereits als höchst unfallgefährdend eingestuft werden.

Bei einem Bremssystem für ein Level 3 Fahrzeug sollte eine Bremsverzögerung von mindestens 0,5 g erreicht werden, wobei zudem die ABS-Funktion sichergestellt sein muss.

### II. Doppelfehler mit Totalausfall der Bremse

Bei vielen Systemen werden Doppelfehler akzeptiert, wenn die Ausfallwahrscheinlichkeit auf Basis ppm und FIT-Daten gering ist.

Ein Risiko stellen insbesondere schlafende Fehler dar, sofern keine entsprechende Diagnose durchgeführt wird.

Bei hohen Sicherheitsanforderungen sollten kritische Einzelfehler, welche z.B. eine Reduzierung der Bremswirkung auf weniger als 0,5g verursachen, durch Redundanzen verhinderbar und mittels Diagnosefunktionen erkennbar sein. und

Ein typischer Fall eines schlafenden Fehlers wird nachfolgend skizziert:
Das Bremssystem weist z.B. nur eine Druckversorgungseinrichtung auf, welche über Einspeiseventile zwei Bremskreise mit vier Radbremsen versorgt. Sobald eine der vier Radbremsen ausfällt, kann dieser Fehler nicht lokalisiert werden. Als Folge fällt die gesamte Druckversorgung aus. Über Hilfsdruckversorgung, wie z.B. dem Hauptbremszylinder, welcher mittels des Bremspedals betätigbar ist, kann nur noch ein Bremskreis mit reduziertem Druckniveau versorgt werden. Aufgrund des kritisch niedrigen Druckniveaus wird auch nur noch eine sehr schwache und damit gefährliche Bremswirkung erzielt. Meist können wichtige Komponenten auch nicht diagnostiziert werden. So ist z.B. ein Magnetventil, welches im Normalfall stets geöffnet ist, nicht hinsichtlich seiner Dichtheit diagnostizierbar, da erst beim Wechsel in einen anderen Betriebszustand die Leckage und damit der Fehler auftritt.

Ein Doppelfehler mit schlafendem Fehler ist z.B. dann gegeben, wenn der eine Bremskreis ausfällt, welcher über nur ein Kreistrennventil mit dem anderen Bremskreis verbunden ist. Das Kreistrennventil, welches im Normalfall offen ist, muss bei Ausfall des Bremskreises geschlossen werden. Aufgrund eines (schlafenden) Fehlers schließt es jedoch nicht vollständig, so dass als Folge auch der andere Bremskreis ausfällt, was zum totalausfall des Bremssystems führt.

Die wesentlichen Kosten bei einem Bremssystem entstehen durch den (Tandem)-Hauptbremszylinder, die Druckversorgungseinrichtung sowie durch die Anzahl und Art der benötigten Ventile, den Druckgeber und die Steuer- und Regeleinrichtung.

### Aufgabe der Erfindung

Die der Erfindung zugrunde liegende Aufgabe besteht in der Reduzierung von Kosten und Bauvolumen sowie ein Bremssystem mit besserer Sicherheit bzw. Fehlerausfallwahrscheinlichkeit bereitzustellen.

Diese Aufgabe wird erfindungsgemäß mit einem Bremssystem mit den Merkmalen des Anspruchs 1 gelöst. Vorteilhafte Weiterbildungen des Bremssystems gemäß Anspruch 1 ergeben sich durch die Merkmale der Unteransprüche.

### Vorteile der Erfindung

Das erfindungsgemäße Bremssystem zeichnet sich vorteilhaft dadurch aus, es mit einer geringen Anzahl von Ventilen, insbesondere Schaltventilen, auskommt, wodurch der Aufbau vereinfacht ist, der benötigte Bauraum klein ist und zudem kostengünstig ist. Dies ist insbesondere durch den besonderen Aufbau des Sicherheitsgates, mit dem die beiden Bremskreise wahlweise voneinander trennbar oder verbindbar sind, möglich. Gleichzeitig weist das erfindungsgemäße Bremssystem eine sehr hohe Fehlersicherheit bzw. kleine Ausfallwahrscheinlichkeit auf. Zudem bietet das erfindungsgemäße Bremssystem viele Diagnosemöglichkeiten zur Ermittlung von Fehlern, insbesondere schlafenden Fehlern. Auch bei Auftreten von Fehlern stellt das Bremssystem in der Regel noch einen hinreichenden Bremsdruck bzw. eine hinreichend große Bremsverzögerung zur Verfügung.

Durch die besondere Ventilschaltung kann bei Ausfall der Druckversorgungseinrichtung der Hauptbremszylinder noch zur Druckbereitstellung genutzt werden, wobei bei Gefahr bzw. im Falle des Blockierens der Räder ein Druckabbau vorteilhaft über ein Auslassventil gesteuert oder geregelt erfolgen kann. Hierbei kann mittels eines mit einem pulsweitenmodulierten Signal angesteuerten Ventils der Druckabbau, insbesondere dessen zeitlicher Verlauf, genau gesteuert bzw. geregelt werden. Während des Druckabbaus ist dann der Hauptbremszylinder über ein Ventil vom Bremskreis zu trennen. Nach der Druckabbauphase kann dann der Hauptbremszylinder wieder mit dem Bremskreis verbunden werden, damit wieder ein Druckaufbau erfolgen kann.

Wie bereits ausgeführt, ist das erfindungsgemäße Bremssystem diagnosefähig, so dass es z.B. den Voll- oder Teilausfall einer Komponente erkennen kann. Zudem kann vorteilhaft eine Überwachung des Bremsflüssigkeitsniveaus vorgenommen werden, wobei diese mittels eines Niveausensors im Vorratsbehälter erfolgen kann, wodurch auch kleine Leckagen im hydraulischen Bremssystem, insbesondere vom Bremssystem nach außen, erkannt und hierauf entsprechend reagiert werden kann.

Weiterhin kann der Single-Hauptbremszylinder fehlersicher gestaltet werden. Durch die spezielle Ventilschaltung kann vorteilhaft bei einem Ausfall eines Radbremszylinders durch Schließen eines Ventils die Funktionsfähigkeit der übrigen drei Radbremszylinder sichergestellt werden.

Abhängig von der verwendeten Ventilschaltung können verschiedene Level der Sicherheit erreicht werden, wobei für das erfindungsgemäße Bremssystem Level 2 / 2+ die Basis ist.

Das erfindungsgemäße Bremssystem weist gegenübervorbekannten Bremssystemen eine deutlich höhere Fehlersicherheit, bezüglich auftretender Fehler bei Ausfall eines Radbremszylinders, Ausfall des Single-Hauptbremszylinders mit Wegsimulator und auch bei Ausfall des Einspeiseventils. Durch das Vorsehen einer zusätzlichen redundanten Wicklung kann der Motor der Druckversorgungseinrichtung über 2 x 3 Phasen mit der Motorsteuerung verbunden werden, was gerade bei dieser Komponente eine Erhöhung der Fehlersicherheit bewirkt und damit die Druckversorgung eine Ausfallwahrscheinlichkeit hat, die kleiner ist als die Ausfallwahrscheinlichkeit für einen Ausfall eines Radbremszylinders.

Das erfindungsgemäße Bremssystem weist vorteilhaft mindestens ein zentrales Auslassventil auf, über das ein Vorratsbehälter mit mindestens einem Radbremszylinder zum Druckabbau direkt oder über ein Kreistrennventil verbindbar ist. Über das Auslassventil kann in einem Radbremszylinder der Druck abgebaut werden, wobei gleichzeitig oder zeitlich überlappend in einem anderen Radbremszylinder ein Druckabbau erfolgen kann. Auch können bei Ausfall der Druckversorgungseinrichtung mittels des Hauptbremszylinders beide Bremskreise versorgt werden.

Das erfindungsgemäße Bremssystem weist nur eine einzige Druckversorgungseinrichtung auf, welche elektromotorisch angetrieben ist.

Sofern die Druckversorgungseinrichtung eine Pumpe, wie z.B. eine Kolben-Zylinder-Pumpe, aufweist, über die neben dem Druckaufbau auch ein Druckabbau erfolgen kann, so wird vorteilhaft ein schaltbares Einspeiseventil zwischen Bremskreis und Pumpe angeordnet, mit dem bei Ausfall der Pumpe ein Abfluss von Hydraulikmedium in die Pumpe verhindert werden kann. Sofern für die Druckversorgungseinrichtung eine Pumpe lediglich zum Druckaufbau eingesetzt wird, so reicht ein einfaches Rückschlagventil zur Verhinderung des ungewollten Rückflusses aus dem Bremskreis in die Pumpe aus.

Damit bei Ausfall der Druckversorgungseinrichtung dennoch eine Bremsung erfolgen kann, weist das erfindungsgemäße Bremssystem einen Hauptbremszylinder mit einem Kolben auf, der von einer Betätigungseinrichtung, insbesondere in Form eines Bremspedals betätigbar ist, und der über eine wahlweise mittels eines, insbesondere stromlos offenen, Schaltventils absperrbare Hydraulikleitung mit einem Bremskreis oder dem Sicherheitsgate verbunden ist. Optional kann der Arbeitsraum des Hauptbremszylinders mit einem Wegsimulator in Verbindung sein.

In einer vorteilhaften Weiterbildung des zuvor beschriebenen Bremssystems, sind zum Abbremsen eines Fahrzeugrades einer Fahrzeugachse, insbesondere jeweils eines Fahrzeugrades jeder Fahrzeugachse, elektromotorische Radbremsen vorgesehen. Diese elektromotorischen Radbremsen können vorteilhaft jeweils zusätzlich einen hydraulischen Anschluss aufweisen, wobei dieser über eine hydraulische Verbindungsleitung, welche mittels eines Schaltventils wahlweise verschließbar ist, mit einer Bremskreisleitung hydraulisch verbunden bzw. verbindbar ist. Mittels des von der Druckversorgungseinrichtung oder dem Hauptbremszylinder erzeugten Drucks kann somit vorteilhaft ein zusätzliches Bremsmoment für das zugeordnete Fahrzeugrad erzeugt werden, das alleine oder unterstützend zur elektromotorisch erzeugten Bremskraft wirkt.

Durch das vorbeschriebene Auslassventil kann über die Bremskreisleitung vorteilhaft ein Druckabbau in einem Bremskreis bzw. einer Radbremse direkt in den Vorratsbehälter erfolgen. Hierdurch ist es vorteilhaft möglich, dass der Druckabbau in mindestens einer hydraulisch wirkenden Radbremse abhängig vom Zustand des Hydrauliksystems und/oder der Druckregelsituation entweder über die Druckversorgungseinrichtung oder über ein Auslassventil erfolgt.

Die Druckversorgungseinrichtung kann entweder eine Kolben-Zylinder-Pumpe oder eine Rotationspumpe, insbesondere in Form einer Zahnradpumpe, aufweisen.

Sofern leidglich ein Kreistrennventil vorgesehen ist, mittels dem die beiden Bremskreise miteinander hydraulisch verbindbar bzw. voneinander trennbar sind, kann die Einspeisehydraulikleitung und die Bremskreisleitung des ersten Bremskreises mit einem Anschluss, insbesondere mit dem ventilsitzseitigen Anschluss, des Kreistrennventils verbunden sein. Die Bremskreisleitung des zweiten Bremskreises ist dann mit dem anderen Anschluss des Kreistrennventils verbunden. Es ist jedoch ebenso möglich, die Anschlüsse für die Bremskreise zu vertauschen. Durch diesen vorbeschriebenen Aufbau ergibt sich ein besonders kostengünstiges und gleichzeitig fehlersicheres Bremssystem, welches nur wenige Schaltventile benötigt. Der direkte Anschluss des Hauptbremszylinders erfolgt bei diesem Bremssystem vorteilhaft über eine Hydraulikleitung, welche mit dem Bremskreis verbunden ist, der über das einzige Kreistrennventil mit der Druckversorgungseinrichtung verbunden ist. Hierdurch sind der Hauptbremszylinder und die Druckversorgungseinrichtung über mindestens zwei Ventile voneinander getrennt, wodurch vorteilhaft eine Redundanz gebildet ist.

Das bzw. die Kreistrennventile bilden ein Sicherheitsgate (SIG). Sofern ein zusätzliches Trennventil zur wahlweisen Trennung einer Bremskreisleitung vorgesehen ist, so kann auch dieses Trennventil zu dem Sicherheitsgate SIG hinzugezählt werden.

Es kann ein zusätzliches Auslassventil für den ersten Bremskreis vorgesehen werden, über das ebenfalls ein Druckabbau in diesem Bremskreis erfolgen kann. Dieses zusätzliche Auslassventil ist insbesondere dann vorzusehen, wenn über die Pumpe der Druckversorgungseinrichtung selbst kein Druckabbau möglich ist. Dies kann dann der Fall sein, wenn z.B. als Pumpe eine Rotationspumpe vorgesehen ist. Über das zusätzliche Auslassventil kann dann Hydraulikmedium von der Bremskreisleitung direkt hin in den Vorratsbehälter abgeleitet werden.

Beim erfindungsgemäßen Bremssystem kann das dem jeweiligen Radbremszylinder zugeordnete Schaltventil, insbesondere vorzugsweise mittels eines pulsweitenmodulierten Signals, zum gesteuerten Druckabbau genutzt werden, wodurch vorteilhaft die Druckänderungsgeschwindigkeit gesteuert bzw. geregelt werden kann. Hierdurch kann z.B. je nach Bremssituation oder Fahrzeugsituation die Druckänderung bzw. deren zeitlicher Verlauf eingestellt bzw. eingeregelt werden. Hierzu kann auch noch ein Druckgeber verwendet werden, um den aktuellen Druck im Bremskreis zu ermitteln und diesen als Eingangsgröße für einen Regler zu verwenden.

Auch ist über die Schaltventile und ein Auslassventil der Druckabbau für die ABS-Funktion möglich bzw. realisierbar. Hier kann das Schaltventil mittels pulsweitenmodulierten Signals angesteuert werden. Sofern der Druckabbau auch über ein Kreistrennventil hin zur Druckversorgung oder dem Vorratsbehälter erfolgt, so kann auch das Kreistrennventil mittels pulsweitenmodulierten Signals angesteuert werden. Die übrigen in der hydraulischen Verbindung zwischen dem Radbremszylinder und dem Vorratsbehälter durchflossenen Ventile sind dann während des Druckabbaus dauerhaft geöffnet.

Zur Erhöhung der Funktionssicherheit kann ein zusätzliches, insbesondere stromlos offenes, Trennventil in der Bremskreisleitung des ersten Bremskreises angeordnet sein, welches zur Absperrung des ersten Bremskreises von dem Sicherheitsgate und der Druckversorgungseinrichtung dient.

Bei dem erfindungsgemäßen kann vorteilhaft bei Ausfall oder Undichtigkeit des Schaltventils welches den Hauptbremszylinder von dem übrigen Bremssystem abkoppeln kann, die Funktion des Wegsimulators erhalten bleiben, indem das einzige Kreistrennventil bzw. die beiden Kreistrennventile geschlossen werden. Bei einem Totalausfall des Schaltventils kann dann mittels der Druckversorgungseinrichtung lediglich im ersten Bremskreis ein Druckaufbau erfolgen, womit noch 50% der Bremswirkung des Bremssystems bei diagonaler Aufteilung zur Verfügung stehen. Sofern die Vorderachse dem ersten Bremskreis zugeordnet ist, stehen immerhin noch 60% zur Verfügung. Wohingegen bei einer nur geringen Undichtigkeit des Schaltventils ein zusätzlicher Bremsdruckaufbau in dem zweiten Bremskreis mittels der Betätigungseinrichtung und dem Hauptbremszylinder erfolgen kann, und damit noch ca. 75% der eigentlichen Bremswirkung für eine Notbremsung zur Verfügung stehen. In diesem Fall ist auch die Änderung der Pedalcharakteristik zum Wegsimulator nicht mehr groß. In diesem Fall ist keine ABS-Funktion möglich. Insbesondere bei niedrigem Reibbeiwert können in diesem Fall die Räder blockieren. Hat das FV nun eine kleine Leckrate, so ist ABS möglich indem FV geschlossen wird und P_{ab} über SV und ZAV erfolgt. In diesem Fall bleibt das FV im BK2 geschlossen. Zum P_{auf} wird bezogen auf den P_{ab} ein kleinerer Differenzdruck gewählt um ein neues Blockieren zu verhindern. Für die restliche Bremsung bleiben beide SV geschlossen. Somit ist in diesem Sonderfall die Lenkbarkeit erhalten.

Der Druckabbau kann dann immer noch wie oben beschreiben im zweiten Bremskreis, insbesondere auch für die ABS-Funktion, über das Auslassventil erfolgen.

Eine zusätzliche Sicherheit bietet das zweite Kreistrennventil BP2 bei Ausfall des Ventils FV, wobei ein Ausfall z.B. durch eine Undichtigkeit oder einen Fehler im elektrischen Anschluss vorliegen kann. Bei diesem Fehler werden die beiden Kreistrennventile BP1 und BP2 geschlossen, wodurch vorteilhaft die Wegsimulator-Funktion des Wegsimulators WS erhalten bleibt. In diesem Fall erfolgt die Bremsung mittels der Druckversorgungseinrichtung DV in den ersten Bremskreis BK1 mit ca. 50% Bremswirkung bei diagonaler Bremskreisaufteilung. Bei einer Notbremsung mit vom Fahrer gewünschter höherer Bremswirkung kann optional das Kreistrennventil BP2 geöffnet werden, wobei dann über die Fußkraft ein zusätzlicher Druck in dem zweiten Bremskreis BK2 erzeugt werden kann, welcher die Bremswirkung über 75% steigern kann. In diesem Fall ist auch die Änderung der Pedalcharakteristik zum Wegsimulator nicht mehr groß. Bei Ausfall des Ventils FV ist aber keine ABS-Funktion möglich. Insbesondere bei niedrigem Reibbeiwert können in diesem Fall die Räder blockieren. Hat das FV jedoch nur eine kleine Leckrate, so ist die ABS-Funktion dennoch möglich, indem das Ventil FV geschlossen wird und der Druckabbau Pab über das jeweilige Schaltventil SV und das Auslassventil ZAV erfolgt. In diesem Fall bleibt das Ventil FV geschlossen. Zum Druckaufbau Pauf wird bezogen auf den Druckabbau Pab ein kleinerer Differenzdruck gewählt, um ein neues Blockieren der Fahrzeugräder zu verhindern. Für die restliche Bremsung bleiben beide Schaltventile SV geschlossen. Somit ist in diesem Sonderfall die Lenkbarkeit erhalten.

Für die o.g. Fehlerfälle ist diagonale Bremskreisaufteilung günstiger, wegen höherer Abbremsung mit 50% zum Vergleich zur Bremskreisaufteilung Vorderachse/Hinterachse. Hier ist bei Ausfall der Vorderachse VA mit der Hinterachse HA nur ca. 30% verfügbar. Bei der Schaltung mit der sogenannten Notbremsung gilt unabhängig von der Bremskreisaufteilung VA/HA und diagonalen Bremskreisaufteilung ca. 75%.

Mit dem erfindungsgemäßen Bremssystem kann ein modifiziertes Regelkonzept für die ABS-Funktion unter Beibehaltung der Basisalgorithmen eingesetzt werden, wobei hierfür wesentlich weniger Ventile benötigt werden und auch eine Druckmessung beim Druckaufbau erfolgen kann.

Nachfolgend werden anhand von Zeichnungen verschiedene mögliche Ausführungsformen des erfindungsgemäßen Bremssystems erläutert.

Es zeigen:

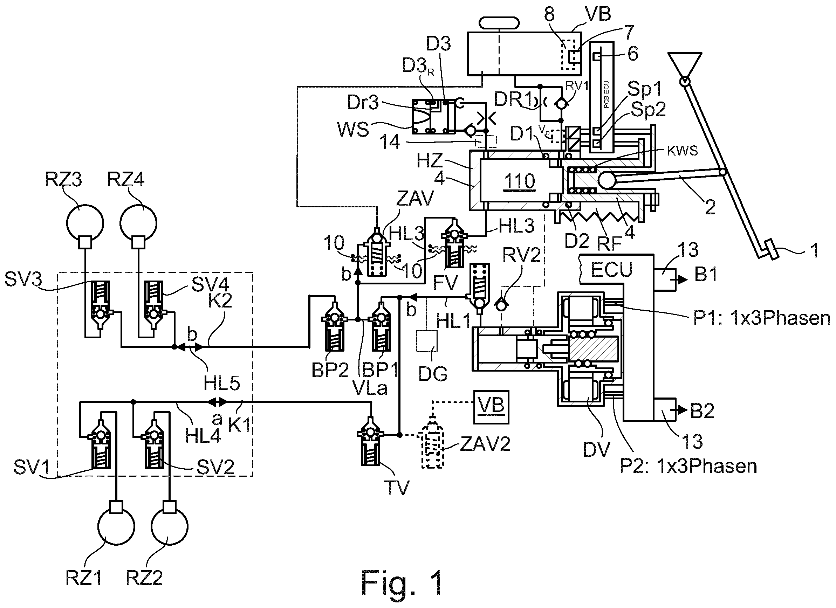

- Fig. 1:: eine erste mögliche Ausführungsform des erfindungsgemäßen Bremssystems mit Single-Hauptbremszylinder mit Wegsimulator, Ventilschaltung und Druckversorgungseinrichtung mit Steuer- und Regeleinheit sowie einem Sicherheitsgate mit zwei Kreistrennventilen;

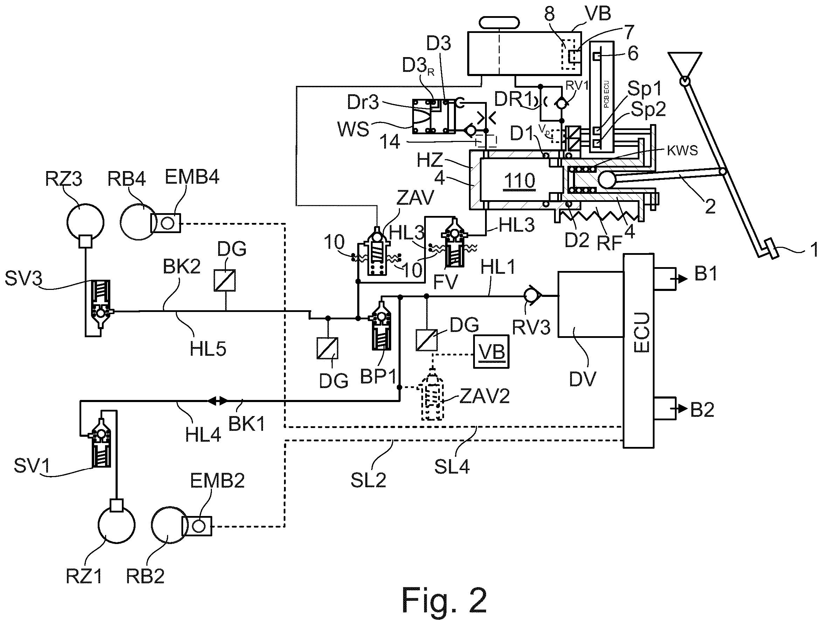

- Fig. 2:: eine zweite mögliche Ausführungsform des erfindungsgemäßen Bremssystems mit Single-Hauptbremszylinder mit Wegsimulator, Ventilschaltung und Druckversorgungseinrichtung mit Steuer- und Regeleinheit sowie einem Sicherheitsgate mit nur einem Kreistrennventil, wobei an der Vorderachse jeweils hydraulisch wirkende Radbremsen und an der Hinterachse elektromechanische Bremsen vorgesehen sind;

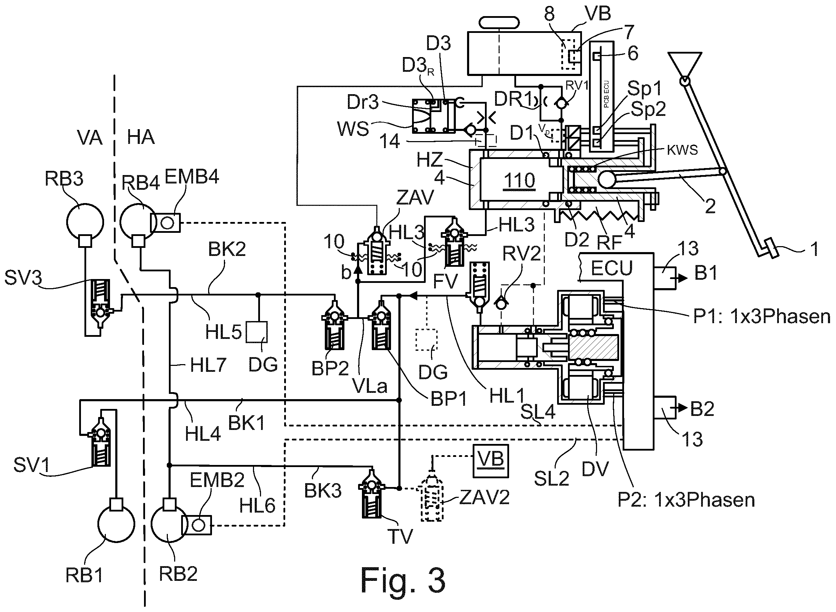

- Fig. 3:: eine dritte mögliche Ausführungsform des erfindungsgemäßen Bremssystems mit Single-Hauptbremszylinder mit Wegsimulator, Ventilschaltung und Druckversorgungseinrichtung mit Steuer- und Regeleinheit sowie einem Sicherheitsgate mit zwei in Reihe geschalteter Kreistrennventile, wobei an der Vorderachse jeweils hydraulisch wirkende Radbremsen und an der Hinterachse hydraulisch unterstützte elektromechanische Bremsen vorgesehen sind;

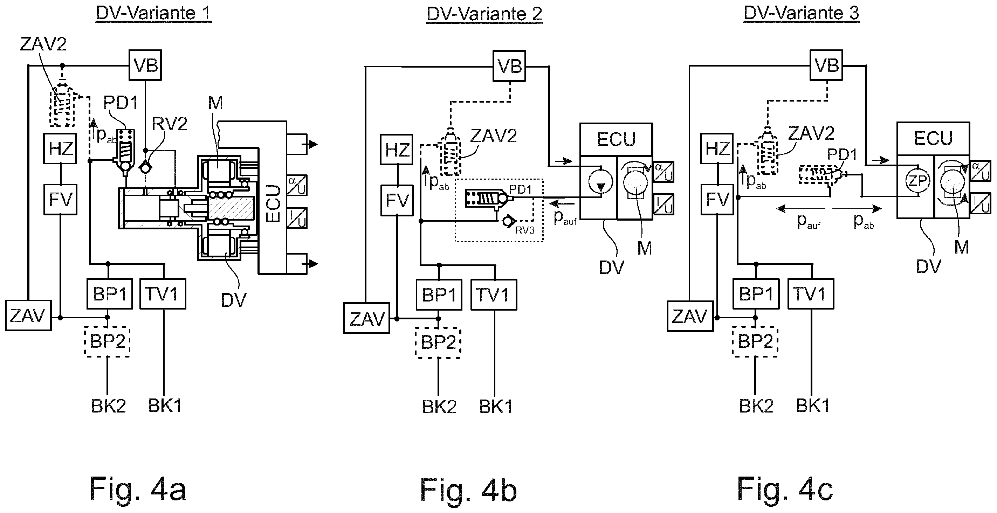

- Fig. 4a-c:: verschiedene Ventilschaltungen für drei verschieden Ausgestaltungen der Druckversorgungseinrichtung.

**Fig 1** zeigt eine erste mögliche Ausführungsform des erfindungsgemäßen Bremssystems, wobei die einzige elektromotorisch angetriebene Druckversorgungseinrichtung DV wirkt vom Bremskreis BK1 in den Bremskreis BK2 über die Hydraulikleitungen Leitung HL1, VLa und HL5 über die Schaltventile SV und die Kreistrennventile BP1 und BP2 zu den Radbremszylindern RZ3 und RZ4. Im Vergleich zum Stand der Technik werden zur Kreistrennung zwei Kreistrennventile BP1 und BP2 verwendet. Die Erfindung sieht daher zwei redundante Ventile als Sicherheitsmerkmale BP1 und BP2 vor, um die Verbindung zu Bremskreis BK2 von der Druckversorgungseinrichtung DV zu ermöglichen. Bei Ausfall der Druckversorgungseinrichtung DV, z.B. bei Ausfall einer Kolbendichtung, wird eine Rückwirkung auf Bremskreis BK2 über die drei redundanten Ventile BP1, BP2 und PD1 verhindert. Die Ventile BP1 und BP2 sind vorzugsweise stromlos offene Ventile, damit bei Ausfall der Druckversorgungseinrichtung DV der Hauptbremszylinder SHZ auf beide Bremskreise BK1 und BK2 wirken kann. Wird Druck über das Öffnen der Ventile ZAV und FV reduziert, so öffnen die beiden Kreistrennventile ohne eigene elektrische Ansteuerung durch den wirkenden Differenzdruck selbstständig.

Die Schaltventile haben folgende Funktionen:
a) Bremskreisausfall an einem Radbremszylinder RZi. Dieser Ausfall wird über die zusätzliche Volumenaufnahme/-förderung der Druckversorgungseinrichtung DV im Vergleich zur sogenannten pv-Kennlinie, welche bei Bandendkontrolle als Fahrzeug-Kennlinie eingelesen oder in Abständen im Fahrzeug gemessen wird, erkannt. Diese Erkennungsverfahren ist an sich bekannt. Allerdings ist es bei normalen Bremssystemen schwierig zu erkennen, welcher Radbremszylinder betroffen bzw. fehlerhaft ist.
   Beim erfindungsgemäßen Bremssystem ist die Lokalisierung dieses Fehlers jedoch relativ problemlos und schnell möglich. Wird die o.g. Abweichung entdeckt, so wird zunächst ein Druck aufgebaut und dann das Kreistrennventil BP1 geschlossen und der anschließende Druckverlauf gemessen. Damit erfolgt eine Prüfung, ob einer oder beide Radbremszylinder RZ3 und RZ4 fehlerhaft sind. Ändert sich der Druck, ist dies ein Zeichen, dass zumindest einer der beiden Radbremszylinder fehlerhaft ist. Zur Prüfung welcher der beiden Radbremszylinder fehlerhaft ist, wird als nächstes das Schaltventil SV3 des Radbremszylinders RZ3 geschlossen. Bleibt der Druck nunmehr konstant, so liegt der Ausfall bei dem Radbremszylinder RZ4. Ändert sich der Druck dagegen, liegt ein Ausfall des Radbremszylinders RZ3 vor. Ändert sich der Druck nicht, so sind beide Radbremszylinder RZ3 und RZ4 in Ordnung. Anschließend wird zur Überprüfung der Radbremszylinder des anderen Bremskreises das Kreistrennventil BP1 geöffnet und die Schaltventile SV3 und SV4 werden geschlossen. Nunmehr wird das Schaltventil SV1 geschlossen. Bleibt der Druck konstant, so ist dies ein Zeichen, dass der Radbremszylinder RZ2 fehlerhaft ist. Ändert sich hingegen der Druck, liegt ein Ausfall des Radbremszylinders RZ1 vor. Die Radbremszylinder des ersten Bremskreises BK1 können auch zeitgleich bzw. parallel zu den Radbremszylindern des zweiten Bremskreises BK2 geprüft werden, indem man die Druckversorgungseinrichtung DV zur Messung des Druckverlaufs verwendet. Bewegt sich bei konstantem Strom die Pumpe, dann ist dies ein Zeichen für einen Druckabfall, sofern eines der Schaltventile SV1 bzw. SV2 geöffnet ist.
b) Die Bremskreise BK1 und BK2 sind durch die Zwischenschaltung der beiden Kreistrennventile BP1 und BP2 abgesichert. Die Bremswirkung ist somit bei Ausfall eines Radbremszylinders immer noch größer 70%. Es müsste ein Dreifachfehler vorliegen, d.h. beide Ventile BP1 und BP2 müssten zusätzlich ausfallen, damit ein Totalausfall des Bremssystems vorliegt. Zumindest ein Bremskreis ist somit sicher gegen Doppelfehler geschützt und verhindert einen Totalausfall des Bremssystems. Sicherheit gegen Doppelfehler, wenn schlafende Fehler auftreten können, ist ein entscheidendes Sicherheitsmerkmal. Auch der erste Bremskreis BK1 ist bei Verwendung des optionalen Trennventils TV1 gegen Doppelfehler sicher geschützt, wodurch auch bei einem Doppelfehler bei einem Ausfall eines Radbremszylinders RZi durch die Schaltventile SVi immer noch drei Radbremszylinder einsetzbar bzw. verwendbar sind.

Die Pedalbewegung wird über redundante Pedalwegsensoren gemessen, die zugleich auf ein KWS-Messelement, wie es in WO2012/059175 A1 beschrieben ist, wirken. Mit dem Signal der Pedalwegsensoren wird die Druckversorgungseinrichtung DV angesteuert, wobei die Kolbensteuerung den Volumenfluss in der Hydraulikhauptleitung HL1 in dem Bremskreis BK1 und über die redundante Kreistrennventile BP1 und BP2 in den zweiten Bremskreis BK2 bewirkt.

Die Pedalbetätigung bewegt den Kolben 3, welcher über den pedalkraftproportionalen Druck auf den bekannten Wegsimulator WS wirkt und damit die Pedalcharakteristik bestimmt. Der Wegsimulator WS kann üblicherweise über ein Ventil 14 abgeschaltet werden, insbesondere in der Rückfallebene bei ausgefallener Druckversorgungseinrichtung. Durch Vorsehen von redundanten Wicklungen mit 2 x 3 Phasenanschluss (P1 und P2) und insbesondere einfacheren Rotationspumpen ist die Ausfallrate der Druckversorgungseinrichtung DV weit unter dem Wert eines Bremskreisausfalls bei Systemen ohne Drive-by-Wire mit zusätzlichem Pedaldurchfall. Daher kann das Ventil 14 grundsätzlich auch eingespart werden.

Über die Leitung HL2, HL3 kann der Hauptbremszylinder SHZ mit den Bremskreisen BK1 oder BK2 verbunden sein, wobei in der Leitung HL2, HL3 das Ventil FV zum Trennen der beiden Leitungsabschnitte HL2 und HL3 angeordnet ist. Diese Verbindung ist nur in der Rückfallebene wirksam. Sofern der Hauptbremszylinder SHZ mit der Verbindungsleitung VLa der beiden Kreistrennventile BP1 und BP2 verbunden ist, bilden die beiden Ventile BP1 und BP2 eine weitere Redundanz. Eine übliche Verbindung vom Ventil FV direkt in einen der beiden Bremskreise BK1, BK2 hätte bei undichtem Ventil FV zur Folge, dass der Bremskreis und damit die Druckversorgungseinrichtung DV auf den Kolben 3 wirkt, was herkömmlich zum Abschalten der Druckversorgung führt.

Eine zusätzliche Sicherheit bietet das zweite Kreistrennventil BP2 bei Ausfall des Ventils FV, wobei ein Ausfall z.B. durch eine Undichtigkeit oder einen Fehler im elektrischen Anschluss vorliegen kann. Bei diesem Fehler werden die beiden Kreistrennventile BP1 und BP2 geschlossen, wodurch vorteilhaft die Wegsimulator-Funktion des Wegsimulators WS erhalten bleibt. In diesem Fall erfolgt die Bremsung mittels der Druckversorgungseinrichtung DV in den ersten Hydraulikkreis BK1 mit ca. 50% Bremswirkung bei diagonaler Bremskreisaufteilung. Bei einer Notbremsung mit vom Fahrer gewünschter höherer Bremswirkung kann optional das Kreistrennventil BP2 geöffnet werden, wobei dann über die Fußkraft ein zusätzlicher Druck in dem zweiten Hydraulikkreis bzw. Bremskreis BK2 erzeugt werden kann, welcher die Bremswirkung über 75% steigern kann. In diesem Fall ist auch die Änderung der Pedalcharakteristik zum Wegsimulator nicht mehr groß. Bei Ausfall des Ventils FV ist aber keine ABS-Funktion möglich. Insbesondere bei niedrigem Reibbeiwert können in diesem Fall die Räder blockieren. Hat das FV jedoch nur eine kleine Leckrate, so ist die ABS-Funktion dennoch möglich, indem das Ventil FV geschlossen wird und der Druckabbau Pab über das jeweilige Schaltventil SV und das Auslassventil ZAV erfolgt. In diesem Fall bleibt das Ventil FV geschlossen. Zum Druckaufbau Pauf wird bezogen auf den Druckabbau Pab ein kleinerer Differenzdruck gewählt, um ein neues Blockieren der Fahrzeugräder zu verhindern. Für die restliche Bremsung bleiben beide Schaltventile SV geschlossen. Somit ist in diesem Sonderfall die Lenkbarkeit erhalten.

Für die o.g. Fehlerfälle ist diagonale Bremskreisaufteilung günstiger, wegen höherer Abbremsung mit 50% zum Vergleich zur Bremskreisaufteilung Vorderachse/Hinterachse. Hier ist bei Ausfall der Vorderachse VA mit der Hinterachse HA nur ca. 30% verfügbar. Bei der Schaltung mit der sogenannten Notbremsung gilt unabhängig von der Bremskreisaufteilung VA/HA ca. 50% und bei der diagonalen Bremskreisaufteilung 75%.

In Figur 1 sind mit den Buchstaben a und b verschiedene Funktionen in den beiden Bremskreisen BK1 und BK2 im Fehlerfall des Ventils FV gekennzeichnet:

| | |
|---|---|
| Fall a) | Die Bremsung erfolgt nur über den ersten Bremskreis BK1 mit der Druckversorgungseinrichtung DV, wenn eine größere Abbremsung von Fahrer gewünscht ist, was z.B. bei einer Notbremsung der Fall ist, die über Sp1 erkennbar ist. |
| Fall b) | Die Bremsung erfolgt mit der Druckversorgungseinrichtung DV in den ersten Bremskreis BK1. Dabei ist das Ventil FV nur leicht undicht. Mit dem Hauptbremszylinder SHZ kann ein Druck in dem zweiten Bremskreis BK2 aufgebaut werden. Sofern die ABS-Funktion verlangt wird, kann ein Druckabbau P_{ab} über das Auslassventil ZAV realisiert werden. Der Druckaufbau P_{auf} erfolgt über die Druckversorgungseinrichtung DV auf ein reduziertes Druckniveau. Nach einer gewissen Zeit, in der ein weiterer Druckaufbau P_{auf} erfolgt, spricht die ABS-Funktion erneut an. |

Neben der Funktion bei Ausfall des Schaltventils FV, ist die zweite Funktion die Regelfunktion (seit Jahrzehnten unverändert) für ABS. In einer 1. Stufe beim Druckabbau P_{ab}. Meldet der Regler, dass ein Rad z.B. das Kriterium von zu viel Druck, so kann zur Beobachtung des Rades der Druckaufbau P_{auf} gestoppt werden. Erfolgt nun vom Regler das Signal "zu viel Bremsmoment/Druck" erfolgt der Druckabbau P_{ab}. In diesem Fall wird das Auslassventil ZAV geöffnet und vorzugsweise das jeweils zugehörige Schaltventil SVi über Pulsweitenmodulation PWM geschaltet, womit die Geschwindigkeit des Druckabbaus P_{ab} gesteuert werden kann. Der Druckabbau P_{ab} wird vom Regler gestoppt, indem die Ventile SV und ZAV wird wieder geschlossen werden. Dabei sind Kreistrennventile BP1 und BP2 offen. Es können auch zwei oder vier Radbremszylinder RZ gleichzeitig im Druckabbaumodus P_{ab} gesteuert werden oder der Druckabbau P_{ab} erfolgt im zweiten Bremskreis BK2 über das Auslassventil ZAV und im ersten Bremskreis über die Druckversorgungseinrichtung DV oder ein optionales zusätzliches Auslassventil ZAV2.

Der Druckabbau P_{ab} kann auch in dem zweiten Bremskreis BK2 über das Auslassventil ZAV erfolgen und im ersten Bremskreis BK1 über die Druckversorgungseinrichtung DV, welche hier ebenso nur als Drucksenkung wirkt.

Die dritte Funktion ist der Druckabbau P_{ab} bei Normalbremse. Hier gibt es zwei Möglichkeiten:
a. Der Druckabbau P_{ab} erfolgt über alle vier Schaltventile SV1-4 mit kurzzeitigem Stopp z.B. nach Δt oder Δp über das Auslassventil ZAV zum Druckausgleich in den beiden Bremskreisen, da die Schaltventile SV1-4 toleranzbehaftet sind. Der Druckabbau P_{ab} kann auch mittels pulsweitenmodulierten Schaltventilen SV gesteuert bzw. geregelt erfolgen.
b. Der Druckabbau P_{ab} erfolgt entweder über das Auslassventil ZAV oder den Single-Hauptbremszylinder SHZ, und dass eines der Kreis trennventile BP1/BP2, sofern es vom Hydraulikmedium durchflossen ist, mittels pulsweitenmodulierten Signals zur Drucksteuerung bzw. - regelung angesteuert werden kann.

In **Fig. 1** sind auch die Hauptbaueinheiten Hauptbremszylinder SHZ, Ventilanordnung HCU und Steuer- und Regeleinrichtung ECU dargestellt. Über das Bremspedal 1 und den Pedalstößel 2 wird über den Kolben 3 Druck erzeugt, welcher über das stromlos offene Ventil FV in den zweiten Bremskreis BK2 und über das ebenso stromlos offene Kreistrennventil BP1 in den ersten Bremskreis BK1 gelangt. Der Kolben 3 besitzt die Primärdichtung D2 und Sekundärdichtung D1 welche über das Rückschlagventil RV1 und die Drossel Dr1 mit dem Vorratsbehälter VB verbunden sind. Diese Komponenten haben eine wichtige Sicherheitsfunktion. Bei Ausfall der Dichtung D2 wird der Leckfluss über die Drossel Dr1 gedrosselt, so dass eine unwesentlich kleine Kolben-Pedalbewegung die Folge ist, z.B. 0,2 mm/s = 2 mm bei 10 s, d.h. ca. 0,05%. Die mittlere Bremszeit beträgt ca. 3 s um ein Fahrzeug aus 100 km/h bei 1 g zu verzögern. Das bedeutet, dass die Pedalbewegung bei Ausfall sehr klein ist und andererseits ein Ausfall der Dichtung D2 durch die Drossel Dr1 nicht zum Ausfall des Single-Hauptbremszylinders SHZ führt. Das Rückschlagventil RV1 hat die Aufgabe, die einfache Entlüftung zu ermöglichen, indem der Single-Hauptbremszylinder SHZ das Volumen über die Entlüftungsschraube an RV1befördert. Das Ansaugen von Bremsflüssigkeit erfolgt über das Rückschlagventil RV1. Die Dichtungen D2 und D1 sind sicherheitsrelevant. Dichtung D2 ist abgesichert durch Dr1 und die Dichtung D1 durch Diagnosefunktionen. Deshalb wird die Dichtung D1 bei jedem Parkstopp diagnostiziert bzw. auf ihre Funktion hin überprüft, indem z.B. der Restdruck in der Bremse über das offene Ventil FV in den Hauptbremszylinder SHZ gelangt. Dabei wird mit dem Druckgeber DG z.B. über z.B. 10 s die Druckänderung gemessen, was dann einer Undichtheit im gesamten Bremssystem entspricht. Wird diese festgestellt, so erfolgt ein zweiter Test, indem die Schaltventile SV zu den Radzylindern RZ1-4 geschlossen werden und von der Druckversorgungseinrichtung DV ein bestimmter Druck, z.B. 20 bar, erzeugt wird und wieder vom Drucksensor DG gemessen wird. Hierbei kann z.B. über die Winkel-Bewegung des Antriebsmotors die Fördermenge gemessen werden. Ist diese größer als die bekannte Fördermenge der Drossel Dr1, so ist die Dichtung D1 undicht. Alternativ zur Drossel Dr1 mit Rückschlagventil RV1 kann auch ein stromlos offenes Magnetventil MV eingesetzt werden, was jedoch mit erheblichen Mehrkosten verbunden ist. Im Normalfall befördert der SHZ-Kolben 3 das Volumen in den Wegsimulator WS bei geschlossenem FV-Ventil. Dies ist die Basiskomponente des "Drive by Wire"-Systems.

Die Funktion des Wegsimulators WS ist Standard. Dessen Kolben besitzt elastische Elemente, welche eine bestimmte druckabhängige Kraft erzeugen. Da die Pedalkraft in Druck und Kolbenweg umgesetzt wird, kann so über den WS-Kolben mit der WS-Kraft eine bestimmte Pedalwegkraftcharakteristik erzeugt werden.

Wie bekannt, ist dabei die Pedalcharakteristik beim Wegsimulatorsystem immer gleich und unabhängig z.B. vom Ausfall eines Bremskreises und erzeugt keinen Pedaldurchfall und hat große Vorteile bei z.B. E-Fahrzeugen mit Rekuperation mit Hilfe des E-Motors. Hierbei bestimmt der Fahrer wieviel Bremsdruck neben dem Bremsmoment des E-Motors für die gewünschte Bremswirkung die Druckversorgungseinrichtung DV erzeugen muss. Der Pedalweg wird redundant über die Pedalwegsensoren gemessen und bestimmen den Bremsdruck der von der Druckversorgungseinrichtung DV erzeugt wird und vom Drucksensor DG gemessen wird.

Für die Realisierung der redundanten Pedalwegsensoren gibt es verschiedene Lösungen. Diese sind u.a. auch in PCT/EP2016/055471 beschrieben.

Die redundanten Pedalwegsensoren können mit zwei Kolben, wie dargestellt, und einer Feder zwischen beiden Kolben gekoppelt werden. Dies hat den Vorteil, dass man damit eine Kraftwegmessung realisieren kann, mit zusätzlichen Vorteilen der Fehleranalyse, z.B. hinsichtlich klemmender Kolben 3. Dies ist u.a. in der DE102010050132 offenbart.

Bei Ausfall des Druckgebers DG kann der Druck auch über den Motorstrom eingestellt werden, da für diesen Fall die Strom-Druckrelation für die Druckerhöhung und Druckabsenkung P_{auf} und P_{ab} in einem Kennfeld abgelegt ist. Der Wegsimulator WS hat zwei Dichtungen D3 und D3r. Nach der Dichtung D3 ist eine redundante Dichtung D3r mit Drossel Dr3 vorgesehen, welche dieselbe Funktion hat wie Dr1. Bei Ausfall der Dichtung D3 entsteht ein Leckfluss, welcher über die Drossel Dr3 gedrosselt wird und zu keinem Ausfall des Hauptbremszylinders SHZ führt. Die Diagnose erfolgt zusammen - wie beschrieben - mit den Dichtungen D1 und D2. Der Wegsimulator WS hat eine übliche Drossel für die Pedalbewegung zusammen mit einem Rückschlagventil RV zur schnellen Entleerung des Wegsimulators WS.

Mit der Dichtungs- und Drosselkonfiguration wird ein fehlersicheres SHZ geschaffen, was bei Verzicht auf einen Tandem-HZ mit redundantem Kolben von großer Bedeutung ist.

Die Druckversorgungseinrichtung DV ist nur prinzipiell dargestellt und ist in PCT/EP2018/071923 detailliert beschreiben. Das Einspeiseventil PD1 hat eine Sicherheitsfunktion bei Ausfall der Druckversorgungseinrichtung DV. Über das Rückschlagventil RV2 kann Bremsflüssigkeit aus dem Vorratsbehälter VB nachgefördert werden. Das Einspeiseventil PD1 kann auch entfallen, wenn die Pumpe der Druckversorgungseinrichtung DV selbsthemmend ist und die Pumpe auch ohne funktionierenden Antrieb keinen Druckabbau im Bremskreis zuläßt.

Die Ventile, die Druckversorgungseinrichtung DV und der Hauptbremszylinder SHZ sind in einem Block zusammengefasst. Die Steuer- und Regeleinrichtung ECU umfasst nach dem Stand der Technik alle elektrischen und elektronischen Komponenten und elektrischen Verbindungen zu den Sensoren und den Magnetventilen über die mit der Leiterplatte PCB verbundenen Spulen. Über die Stecker 13 (ein- oder zweifach) erfolgt die Verbindung zum Bordnetz.

Die **Fig. 2** zeigt eine vereinfachte Lösung des Sicherheitsgates SIG mit nur einem Kreistrennventil BP1 für ein gemischtes Bremssystem mit elektromechanischer Hinterachsbremse.

Der Hauptbremszylinder SHZ entspricht dem in Fig. 1 dargestellten Hauptbremszylinder. Das Sicherheitsgate SIG mit seinem Ventil BP1 ermöglicht zusammen mit dem Auslassventil ZAV, dem Ventil FV und den Schaltventilen SV fast alle Funktionen die beim Bremssystem gem. Fig. 1 beschrieben sind. Ohne das zweite Kreistrennventil BP2 ist der zweite Bremskreis BK2 mit bei fehlerhaftem Ventil FV jedoch nicht doppelfehlersicher. Die Druckversorgungseinrichtung DV ist hier über das Rückschlagventil RV3 vom Bremskreis BK1 getrennt, so dass im Falle der Verwendung einer Rotationskolbenpumpe kein Hydraulikmedium vom Bremskreis BK1 zurück in die Pumpe fließen kann.

Bei der Hinterachse HA werden elektromagnetische Bremsen EMB eingesetzt, welche nach dem Stand der Technik auch die Funktion der Parkierbremse übernehmen können sowie auch für die ABS-Funktion genutzt werden können. Die elektrischen Funktionen sind in der Steuer und Regeleinheit ECU enthalten. Optional kann noch ein zusätzliches Auslassventil ZAV2, welches gestrichelt dargestellt ist, für den Bremskreis BK1 vorgesehen werden, über das ein Druckabbau Pab hin zu dem Vorratsbehälter VB möglich ist.

Die **Fig. 3** zeigt wieder das Sicherheitsgate SIG aus Fig. 1 mit der gleichen Druckversorgungseinrichtung DV, Auslassventil ZAV und Ventil FV, mit den Bremskreisen BK1 und BK2 und dem Hauptbremszylinder SHZ und der Steuer-und Regeleinheit ECU. Im Unterschied zur in Fig. 2 dargestellten elektromechanischen Bremse EMB sind die an der Hinterachse verwendeten elektromechanischen Bremsen zusätzlich hydraulisch unterstützt. Diese Bremsen sind aus PCT/EP2019/061909 bekannt. Die beiden hydraulisch unterstützten elektromechanischen Bremsen EMB2 und EMB4 sind dabei dem dritten Bremskreis BK3 zugeordnet und übernehmen die Funktion der Primärbremsen mit ABS-Funktion und der Funktion der Parkierbremse. Die EMB-Funktion beschränkt sich dabei auf die Fixierung der Bremswirkung der Parkierbremse über entsprechend konstruierte Gestaltung, s. PCT/EP2019/061909 sowie für die ABS-Funktion in der Notfallebene, insbesondere bei Ausfall der Druckversorgungseinrichtung. Der Vorteil sind erheblich geringere Kosten bei der hydraulisch unterstützten elektromagnetischen Bremse EMB2, EMB4, welche ähnlich zur heutigen Parkierbremse ist, wobei jedoch der Motor eine höhere Leistung zum Notbetrieb für die HA-Bremse und auch die ABS-Funktion bei Ausfall der Druckversorgungseinrichtung DV hat. Auch hier kann optional noch ein zusätzliches Auslassventil ZAV2, welches gestrichelt dargestellt ist, für den Bremskreis BK1 vorgesehen werden, über das ein Druckabbau Pab hin zu dem Vorratsbehälter VB möglich ist.

Die **Fig. 4a - 4c** zeigen Varianten der Druckversorgungseinrichtung DV, wobei die Ventilschaltungen des Sicherheitsgates SIG denen der Fig. 1 bis 3 gleichen.

**Fig. 4a** entspricht dabei der Fig. 1.

**Fig. 4b** zeigt eine Ausführung mit Kolbenpumpe mit zusätzlicher zentralen Auslassventil ZAV zum Druckabbau P_{ab}, da dies die Auslassventile der Kolbenpumpe nicht ermöglichen. Als Alternative zum Einspeiseventil PD1 kann ein Rückschlagventil RV3 eingesetzt werden, s. Fig. 2.

Die **Fig. 4c** zeigt eine Zahnradpumpe, welche wegen des Leckflusses das schaltbare Einspeiseventil PD1 benötigt. Vorteil der Zahnradpumpe ist die Volumenförderung in zwei Richtungen, so dass mit dieser sowohl ein geregelter Druckaufbau als auch ein geregelter Druckabbau realisierbar ist. Sofern die verwendete Pumpe keinen Leckfluss aufweist, kann das Ventil PD1 auch entfallen.

Bei allen Lösungen liefert die Druckversorgungseinrichtung DV sowohl ein Winkel-Signal des Rotors als auch die Strommessung des EC-Motors.

Nachfolgend werden weitere Beispiele offenbart.

"Beispiel 1" betrifft ein Bremssystem für ein Fahrzeug mit einer Vorderachse (VA) und einer Hinterachse (HA), wobei das Bremssystem aufweist:
- je eine elektromechanische Radbremse (EMB2, EMB4) an je einem Rad der Hinterachse (HA);
- einen ersten Bremskreis (BK1) und optional einen zweiten Bremskreis (BK2), jeweils mit einer Bremskreisleitung (HL4, HL5) für eine hydraulisch wirkende Radbremse (RB1, RB3) für ein Rad der Vorderachse (VA) des Fahrzeugs,
- einen dritten Bremskreis (BK3) mit einer dritten Bremskreisleitung (HL6) für zumindest eine hydraulisch wirkende Radbremse (RB2, RB4) für ein Rad der Hinterachse (HA),
- eine Druckversorgungseinrichtung (DV),
- eine Steuer- und Regeleinrichtung (ECU) zum Ansteuern der Druckversorgung (DV) und der elektromechanischen Bremsen (EMB2, EMB4),
- wobei mittels der Druckversorgungseinrichtung (DV) ein Druckaufbau (P_{auf}) in den hydraulischen Radbremsen (RB1, RB2, RB3, RB4) über jeden Bremskreis (BK1, BK2, BK3) durchführbar ist,
- wobei die Steuer- und Regeleinrichtung (ECU) dazu eingerichtet ist, die elektromechanischen Radbremsen (EMB2, EMB4) und die zumindest eine hydraulisch wirkende Radbremse (RB2, R4) des dritten Bremskreises (BK3) so zu steuern, dass
   ∘ die elektromechanischen Radbremsen (EMB2, EMB4) hydraulisch unterstützt werden und die Funktion einer Primärbremse mit ABS-Funktion sowie die Funktion einer Parkbremse übernehmen;
      und/oder
   ∘ die elektromechanischen Radbremsen (EMB2, EMB4) eine ABS-Funktion in der Notfallebene übernehmen, insbesondere bei einem Ausfall der Druckversorgungseinrichtung (DV).

"Beispiel 2" betrifft ein Bremssystem gemäß "Beispiel 1", dadurch gekennzeichnet, dass die Druckversorgungseinrichtung (DV) eine Pumpe umfasst, insbesondere eine Kolben-Zylinder-Pumpe, die verwendet werden kann, um einen Druckaufbau (P_{auf}) und einen Druckabbau (_{ab}) durchzuführen, wobei eine Einspeisehydraulikleitung (HL1) vorgesehen ist als hydraulische Verbindung von der Druckversorgungseinrichtung (DV) zu den Bremskreisen (BK1, BK2, BK3), wobei ein Einspeiseventil (PD1) dazu dient, die Einspeisehydraulikleitung (HL1) selektiv zu schließen und zu öffnen.

"Beispiel 3" betrifft ein Bremssystem gemäß "Beispiel 1" oder "Beispiel 2", dadurch gekennzeichnet, dass zumindest ein Auslassventil (ZAV) vorgesehen ist, über das eine Bremskreisleitung (HL4, HL5, HL6) eines Bremskreises direkt mit einem Vorratsbehälter (VB) zum Druckabbau (P_{ab}) verbindbar ist.

"Beispiel 4" betrifft ein Bremssystem gemäß "Beispiel 3", dadurch gekennzeichnet, dass der Druckabbau (P_{ab}) in zumindest einer hydraulisch wirkenden Radbremse (RB1-4) abhängig vom Zustand des Hydrauliksystems und/oder der Druckregelungssituation entweder über die Druckversorgungseinrichtung (DV) oder über ein Auslassventil (ZAV) erfolgt.

"Beispiel 5" betrifft ein Bremssystem gemäß "Beispiel 3" oder "Beispiel 4", dadurch gekennzeichnet, dass die Ventile, Druckversorgungseinrichtung (DV), Hauptzylinder (SHZ) und Vorratsbehälter (VB) in einer Baueinheit zusammengefasst sind.

"Beispiel 6" betrifft ein Bremssystem gemäß einem der vorhergehenden

Beispiele, dadurch gekennzeichnet, dass die Steuer- und Regeleinrichtung (ECU) redundant mit einer zweifachen Verbindung (B1, B2) mit dem Bordnetz verbunden ist.

"Beispiel 7" betrifft ein Bremssystem gemäß einem der vorhergehenden Beispiele, dadurch gekennzeichnet, dass die Druckversorgungseinrichtung (DV) einen Motor (M) aufweist, der über 2 x 3 Phasen mit der Steuer- und Regeleinrichtung (ECU) der Druckversorgungseinrichtung (DV) verbunden ist.

"Beispiel 8" betrifft ein Bremssystem gemäß einem der vorhergehenden Beispiele, dadurch gekennzeichnet, dass einzelne Bremskreise (BK1, BK2) für jede hydraulisch wirkende Radbremse (RB1, RB3) für die Räder der Vorderachse (VA) vorgesehen sind, wobei für jede hydraulisch wirkende Radbremse (RB1, RB3) der Vorderachse (VA) ein Schaltventil (SV1, SV3) vorgesehen ist.

"Beispiel 9" betrifft ein Bremssystem gemäß einem der vorhergehenden Beispiele, gekennzeichnet durch einen Single-Hauptzylinder (SHZ), der durch eine als Bremspedal (1) ausgebildete Betätigungseinheit betätigbar ist, und der nur einen Arbeitsraum (110) aufweist, wobei der Arbeitsraum (110) über eine hydraulische Leitung (HL3) mit einem stromlos offenen Trennventil (TV) mit dem dritten Bremskreis (BK3) verbunden oder verbindbar ist.

"Beispiel 10" betrifft ein Bremssystem gemäß "Beispiel 9", dadurch gekennzeichnet, dass der Arbeitsraum 110) des Hauptzylinders (SHZ) über ein Rückschlagventil (RV1) und eine Drossel (Dr1) mit einem Vorratsbehälter (VB) verbunden oder verbindbar ist.

"Beispiel 11" betrifft ein Bremssystem gemäß "Beispiel 10", dadurch gekennzeichnet, dass der Vorratsbehälter (VB) zumindest einen Niveaugeber (7, 8) aufweist und dass ein Sensor (6) zur Erfassung der Position des Niveaugebers (7, 8) vorgesehen ist.

"Beispiel 12" betrifft ein Bremssystem gemäß "Beispiel 11", dadurch gekennzeichnet, dass mittels des Niveaugebers (7, 8) und des Sensors (6) fortlaufend der Füllstand der Hydraulikflüssigkeit im Vorratsbehälter (VB) ermittelbar ist bzw. ermittelt wird, um eine Leckage zu erkennen.

"Beispiel 13" betrifft ein Bremssystem gemäß einem der vorhergehenden Beispiele, dadurch gekennzeichnet, dass ein Druckgeber (DG) vorgesehen ist, um den in zumindest einem Bremskreis (BK1, BK2, BK3) herrschenden Druck (p) zu ermitteln, wobei der Druckgeber (DG) dazu eingerichtet ist, den Druck (p) in einer der Bremskreisleitungen (HL4, HL5, HL6) zu ermitteln.

"Beispiel 14" betrifft ein Bremssystem gemäß einem der vorhergehenden Beispiele, dadurch gekennzeichnet, dass ein stromlos offenes Schaltventil (FV) dazu dient, eine Verbindung zwischen einem hydraulischen Radbremszylinder (RZ1, RZ3) und einem der Bremszylinder (BK1, BK2, BK3) selektiv zu schließen oder zu öffnen.

"Beispiel 15" betrifft ein Bremssystem gemäß einem der vorhergehenden Beispiele, dadurch gekennzeichnet, dass zumindest ein stromlos offenes Kreistrennventil (BP1, BP2) vorgesehen ist, das dazu vorgesehen ist, selektiv eine hydraulische Leitung (HL2, HL3) zu schließen oder zu öffnen, die die Druckversorgungseinrichtung (DV) oder den Single-Hauptzylinder (SHZ) mit einem der Bremszylinder (BK1, BK2, BK3) verbindet.

"Beispiel 16" betrifft ein Bremssystem gemäß einem der vorhergehenden Beispiele, dadurch gekennzeichnet, dass der Arbeitsraum (110) des Hauptzylinders (SHZ) mit einem Wegsimulator (WS) verbunden ist.

"Beispiel 17" betrifft ein Bremssystem gemäß einem der vorhergehenden Beispiele, dadurch gekennzeichnet, dass ein Druckabbau (P_{ab}) in allen hydraulischen Radbremsen (RB1, RB3) der Vorderachse (VA) über ein jeweils zugeordnetes Schaltventil (SV1, SV3) ausgeführt wird.

### Bezugszeichenliste

- SHZ: Single-Hauptbremszylinder
- ECU: elektronische Steuer- und Regeleinheit
- HCU: hydraulische Steuereinheit
- KWS: Kraftwegsensor
- RV1: Rückschlagventil 1
- RV2: Rückschlagventil 2
- RV3-6: Rückschlagventil 3-6
- RF: Rückstellfeder
- Dr 1-3: Drosseln
- RZ1-4: Radzylinder
- SV 1-4: Schaltventile
- DV: elektromotorische Druckbereitstellungseinheit
- HL 1,3, 4,5: hydraulische Leitungsverbindungen
- VB: Vorratsbehälter
- ZAV1/2: zentrales Auslassventil
- BP1/2: Kreistrennventil
- FV: Einspeiseventil vom SHZ in BK
- SV: Schaltventil zu RZ
- DG: Druckgeber p = f (v)
- V: Diagnoseventil
- E: Ventilfeder
- WS: Wegsimulator, Kolben
- D1-3: Dichtungen
- Sp1,2: Pedalwegsensoren
- TV1: Trennventil
- SIG: Sicherheitsgate
- EMB: elektromotorische Bremse
- a): P_{auf}/P_{ab} im Fehlerfall FV mit DV in BK1
- b): P_{auf}/P_{ab} im Fehlerfall FV mit DV und SHZ mit ABS
- 1: Bremspedal
- 2: Pedalstößel
- 3: HZ-Kolben
- 4: HZ-Gehäuse
- 5: PCB
- 6: Sensorelement für Niveaugeber
- 7: Sensortarget
- 8: Schwimmer im Vorratsbehälter
- 9: elektrische Elemente für Wegsimulatoren für Kraft Charakteristik
- 10: redundanter elektrischer Anschluss, ggf. mit redundanter Spule
- 11: redundanter Anschluss an Motor für 2 x 3 Phasenwicklung
- 12: redundanter Anschluss für 2 x 3 Phasenmotor
- 13: elektrischer Stecker zum Bordnetzanschluss
- 14: Wegsimulator-Trennventil

## Patentansprüche

1. Bremssystem für ein Fahrzeug mit:
- einer Vorderachse (VA) und einer Hinterachse (HA);
- je einer elektromechanischen Bremse (EMB2, EMB4) an jedem Rad der Hinterachse (HA);
- je einer hydraulisch wirkenden Radbremse (RB1, RB3) mit einem Radbremszylinder (RZ1, RZ3) an jedem Rad der Vorderachse (VA);
- einer elektromotorischen Druckversorgungseinrichtung (DV) zum Druckaufbau (Pauf) in den hydraulisch wirkenden Radbremsen (RB1, RB3) der Vorderachse (VA);
- einem Vorratsbehälter (VB);
- einer Steuer- und Regeleinrichtung (ECU) zum Ansteuern der Druckversorgungseinrichtung (DV) und der elektromechanischen Bremsen (EMB2, EMB4); wobei
- die Druckversorgungseinrichtung (DV) als Druckquelle eine von einem Elektromotor (M) rotierend angetriebene Rotationspumpe aufweist;
- der Elektromotor (M) ein elektronisch kommutierter Motor (EC-Motor) ist, wobei die Druckversorgungseinrichtung (DV) ein Winkel-Signal des Rotors sowie eine Strommessung des EC-Motors bereitstellt; und
- jede hydraulisch wirkende Radbremse (RB1, RB3) der Vorderachse (VA) über ein ihr zugeordnetes Schaltventil (SV1, SV3) mit der Druckversorgungseinrichtung (DV) verbindbar ist, wobei der Druckaufbau (Pauf) in der jeweiligen Radbremse über das ihr zugeordnete Schaltventil (SV1, SV3) erfolgt.

2. Bremssystem gemäß Anspruch 1,
**dadurch gekennzeichnet, dass**
die Rotationspumpe eine Rotationskolbenpumpe oder eine Zahnradpumpe ist.

3. Bremssystem gemäß Anspruch 1 oder 2,
**dadurch gekennzeichnet, dass**
die Steuer- und Regeleinrichtung (ECU) dazu eingerichtet ist, die Fördermenge der Rotationspumpe anhand des Winkel-Signals des Rotors zu ermitteln und den Druck in den hydraulisch wirkenden Radbremsen (RB1, RB3) anhand der Strommessung des EC-Motors einzustellen, insbesondere anhand eines in einem Kennfeld abgelegten Strom-Druck-Zusammenhangs, insbesondere bei Ausfall eines Druckgebers (DG).

4. Bremssystem gemäß einem der vorhergehenden Ansprüche,
**dadurch gekennzeichnet, dass**
die Steuer- und Regeleinrichtung (ECU) dazu eingerichtet ist, einen Fehler, insbesondere eine Undichtigkeit oder einen Ausfall, einer Radbremse (RB1, RB3) der Vorderachse (VA) zu erkennen und die betroffene Radbremse durch Schließen des ihr zugeordneten Schaltventils (SV1, SV3) vom Bremskreis abzutrennen, so dass die Funktionsfähigkeit der zumindest einen übrigen, nicht ausgefallenen Radbremse (RB3, RB1) der Vorderachse (VA) sichergestellt bleibt;
wobei optional die Steuer- und Regeleinrichtung (ECU) dazu eingerichtet ist, den Fehler anhand einer Abweichung der über das Winkel-Signal des Rotors ermittelten Volumenaufnahme bzw. -förderung der Druckversorgungseinrichtung (DV) von einer Druck-Volumen-Kennlinie zu erkennen und die fehlerhafte Radbremse durch Schließen eines Kreistrennventils (BP1) sowie anschließend aufeinanderfolgendes Schließen einzelner Schaltventile (SV1, SV3) und Auswertung des sich jeweils einstellenden Druckverlaufs zu lokalisieren.

5. Bremssystem gemäß einem der vorhergehenden Ansprüche,
**dadurch gekennzeichnet, dass**
das Schaltventil (SV1, SV3) die einzige hydraulische Verbindung des Radbremszylinders (RZ1, RZ3) mit dem Bremskreis bildet und in seiner geschlossenen Stellung den Radbremszylinder (RZ1, RZ3) hydraulisch absperrt.

6. Bremssystem gemäß den Ansprüchen 4 und 5,
**dadurch gekennzeichnet, dass**
durch das Schließen des Schaltventils (SV1, SV3) eine erkannte Undichtigkeit eindeutig der jeweiligen Radbremse (RB1, RB3) zuordenbar ist, indem bei geschlossenem Schaltventil (SV1, SV3) der Druckverlauf im Bremskreis ausgewertet wird.

7. Bremssystem gemäß einem der Ansprüche 1 bis 6,
**gekennzeichnet durch**
einen von einer Betätigungseinrichtung, insbesondere einem Bremspedal (1), betätigbaren Single-Hauptbremszylinder (SHZ) mit nur einem Arbeitsraum (110), der zur Druckbereitstellung bei Ausfall der Druckversorgungseinrichtung (DV) mit zumindest einer der hydraulisch wirkenden Radbremsen (RB1, RB3) bzw. einem Bremskreis (BK1, BK2) verbindbar ist.

8. Bremssystem gemäß Anspruch 7,
**dadurch gekennzeichnet, dass**
ein Kolben (3) des Single-Hauptbremszylinders (SHZ) eine Primärdichtung (D2) und eine Sekundärdichtung (D1) aufweist und der Arbeitsraum (110) über ein Rückschlagventil (RV1) und eine Drossel (Dr1) mit dem Vorratsbehälter (VB) verbunden ist, wobei bei einem Ausfall der Primärdichtung (D2) der Leckfluss durch die Drossel (Dr1) begrenzt ist, und wobei die Dichtheit der Sekundärdichtung (D1) mittels einer Diagnosefunktion, insbesondere bei jedem Parkstopp, über einen Druckgeber (DG) überprüfbar ist;
wobei optional der Arbeitsraum (110) mit einem Wegsimulator (WS) in Verbindung steht, welcher eine Dichtung (D3) und eine dazu redundante Dichtung (D3r) mit einer Drossel (Dr3) aufweist, wobei bei einem Ausfall der Dichtung (D3) der Leckfluss durch die Drossel (Dr3) begrenzt ist.

9. Bremssystem gemäß einem der vorhergehenden Ansprüche,
**gekennzeichnet durch**
mindestens ein Auslassventil (ZAV, ZAV2), über das der Vorratsbehälter (VB) mit mindestens einer Radbremse (RB1, RB3) bzw. einer Bremskreisleitung zum Druckabbau (Pab) verbindbar ist, wobei bei einer ABS-Funktion der Druckabbau (Pab) über das der Radbremse zugeordnete Schaltventil (SV1, SV3) und das Auslassventil (ZAV) erfolgt, insbesondere mit pulsweitenmoduliert angesteuertem Schaltventil (SV1, SV3).

10. Bremssystem gemäß einem der vorhergehenden Ansprüche,
**dadurch gekennzeichnet, dass**
die Rotationspumpe eine Kolbenpumpe ist, deren Saugseite mit dem Vorratsbehälter (VB) und deren Druckseite mit den hydraulisch wirkenden Radbremsen (RB1, RB3) verbunden ist und über die insbesondere nur ein Druckaufbau (Pauf) durchführbar ist, so dass der Druckabbau (Pab) über ein Auslassventil (ZAV, ZAV2) erfolgt, wobei ein Rückschlagventil (RV3) oder ein Einspeiseventil (PD1) einen Rückfluss aus dem Bremskreis in die Pumpe verhindert.

11. Bremssystem gemäß einem der Ansprüche 1 bis 10, mit Ausnahme des Anspruchs 2,
**dadurch gekennzeichnet, dass**
die Rotationspumpe eine Rotationskolbenpumpe ist, die über ein Rückschlagventil (RV3) vom Bremskreis (BK1) getrennt ist, so dass kein Hydraulikmedium vom Bremskreis in die Pumpe zurückfließen kann.

12. Bremssystem gemäß einem der Ansprüche 1 bis 10,
**dadurch gekennzeichnet, dass**
die Rotationspumpe eine Zahnradpumpe mit einer Volumenförderung in zwei Richtungen ist, so dass durch Umkehr der Förder- bzw. Drehrichtung sowohl ein geregelter Druckaufbau (Pauf) als auch ein geregelter Druckabbau (Pab) über die Zahnradpumpe selbst durchführbar ist, wobei insbesondere ein schaltbares Einspeiseventil (PD1) vorgesehen ist, das bei leckflussfreier Pumpe entfallen kann.

13. Bremssystem gemäß einem der vorhergehenden Ansprüche,
**dadurch gekennzeichnet, dass**
der EC-Motor (M) über einen zweifachen dreiphasigen Anschluss (2 × 3 Phasen) mit der Steuer- und Regeleinrichtung (ECU) verbunden ist.

14. Bremssystem gemäß einem der vorhergehenden Ansprüche,
**dadurch gekennzeichnet, dass**
die elektromechanischen Bremsen (EMB2, EMB4) der Hinterachse (HA) die Funktion einer Parkbremse und/oder eine ABS-Funktion in einer Notfallebene, insbesondere bei Ausfall der Druckversorgungseinrichtung (DV), übernehmen.

15. Verfahren zum Betreiben eines Bremssystems gemäß einem der vorhergehenden Ansprüche,
**dadurch gekennzeichnet, dass**
ein Fehler, insbesondere eine Undichtigkeit oder ein Ausfall, einer hydraulisch wirkenden Radbremse (RB1, RB3) der Vorderachse (VA) anhand einer Abweichung der über das Winkel-Signal des Rotors des EC-Motors (M) ermittelten Volumenaufnahme der Druckversorgungseinrichtung (DV) von einer Druck-Volumen-Kennlinie erkannt wird, dass zur Lokalisierung der fehlerhaften Radbremse die zugeordneten Schaltventile (SV1, SV3) nacheinander geschlossen und der sich jeweils einstellende Druckverlauf ausgewertet wird, und dass nach der Lokalisierung das Schaltventil (SV1, SV3) der fehlerhaften Radbremse geschlossen gehalten und der Druckaufbau (Pauf) in der zumindest einen übrigen Radbremse (RB3, RB1) fortgesetzt wird.
